# EUROPEAN PATENT SPECIFICATION

(11) **EP 2 514 996 B1**
(45) Date of publication and mention of the grant of the patent: **31.12.2014**
(21) Application number: 12164207.8
(22) Date of filing: 16.04.2012
(51) Int. Cl.: F16H 7/08

(54) **Method for assembling a hydraulic auto-tensioner**
Verfahren zur Montage eines hydraulischen Selbstspanners
Procédé d'assemblage d'un tendeur automatique hydraulique

(30) Priority: 20.04.2011 JP 2011093675
(43) Date of publication of application: 24.10.2012
(73) Proprietor: NTN Corporation, Osaka-shi, Osaka (JP)
(72) Inventor: Takano, Takehiro, Iwata-shi, Shizuoka (JP)
(74) Representative: Grünecker, Kinkeldey, Stockmair & Schwanhäusser

(56) References cited:
- WO-A1-2010/044520
- DE-A1- 4 408 121
- DE-A1- 4 427 683
- DE-A1-102006 016 494
- KR-A- 20000 034 652

## Description

This invention relates to a hydraulic auto-tensioner for keeping constant the tension of a timing belt in a belt transmission mechanism for driving camshafts of an internal combustion engine, or of a belt for driving engine accessories.

A belt transmission mechanism mounted in an automotive internal combustion engine for driving camshafts includes a timing belt (hereinafter simply referred to as "belt"). The tension of the belt changes when the belt is stretched due to changes in distance between shafts resulting from thermal expansion of the engine body while the engine is running or due to aging of the belt.

In order to keep constant the belt of such a belt transmission mechanism, thereby preventing flapping of the belt, which could cause noise and skipping of teeth, a hydraulic auto-tensioner is used to apply adjusting force to the belt.

WO 2010/044520 A1 describes a hydraulic auto-tensioner for a vehicle according to the preamble of claim 1.

KR 2000 0034652 A describes an actuator of a hydraulic auto-tensioner for a vehicle provided to suppress excessive vibration of tension pulley when controlling a tensile force of a timing belt on cold starting state, thereby improves a durability. The actuator of a hydraulic auto-tensioner for a vehicle comprises a body (11), a sleeve (14), a plunger (15), a return spring (13) and a pressing member (16). The pressing member (16) has a rod inserting portion (16a), a fixed flange (16b) and a pressing flange (16c).

One conventional hydraulic auto-tensioner of this type is known as an air-oil two-phase auto-tensioner including a cylinder in which a sleeve having a bottom is fitted. The cylinder has its top opening closed by a seal member to seal hydraulic oil therein with an air layer present over the hydraulic oil. A push rod slidably extends through the seal member. The push rod has a bottom end located in the sleeve. A plunger is provided at the bottom end of the push rod so as to be slidable in the sleeve. The plunger defines a pressure chamber in the sleeve under the plunger. A return spring is mounted in the cylinder to push the push rod outwardly of the cylinder, thereby pressing the belt. This tensioner keeps constant the tension of the belt by the damper action provided by the oil pressure in the pressure chamber and the biasing force of the return spring.

In assembling this type of hydraulic auto-tensioner, when inserting the plunger into the sleeve with the plunger connected to the bottom end of the push rod, the plunger tends to incline under the influence of a plunger spring mounted in the sleeve beforehand and/or hydraulic oil filling the sleeve beforehand. This makes assembling of the auto-tensioner extremely troublesome.

In order to avoid this problem, JP patent 4251885 proposes to use a plunger spring having a length in an unstressed state such that the plunger spring does not contact the bottom surface of the plunger when the bottom end portion of the plunger is inserted in the open top end of the sleeve. In assembling the hydraulic auto-tensioner of this patent, the plunger spring is inserted into the sleeve, and hydraulic oil is supplied into the sleeve until the plunger spring is barely submerged in hydraulic oil. On the other hand, with the return spring and the seal member fitted on the push rod, the bottom end of the push rod is inserted into a rod inserting hole formed in the top surface of the plunger to assemble a hydraulic damper unit. This damper unit is inserted into the cylinder with the plunger first, and then into the sleeve by pushing the push rod. In this state, hydraulic oil is injected into the cylinder through its top opening and the top opening of the cylinder is sealed with a seal member.

With this hydraulic auto-tensioner, it is necessary to supply hydraulic oil into the cylinder twice, i.e. before and after inserting the plunger into the cylinder. Moreover, when inserting the plunger into the sleeve, air remains in the plunger. This makes it necessary to vent air in the pressure chamber, which in turn further complicates assembly of the hydraulic auto-tensioner.

The object of the present invention is to provide a method for easily assembling a hydraulic auto-tensioner.

This object is solved by a method for assembling a hydraulic auto-tensioning comprising the features of claim 1. Advantageously, embodiments of the method can be derived from the respective subclaims 2 to 11.

There is provided a hydraulic auto-tensioner comprising a cylinder having a closed bottom end and an open top end, a valve sleeve made of steel and having a bottom and a top opening, said valve sleeve being inserted in the cylinder, a plunger slidably mounted in the valve sleeve to define a pressure chamber under the valve sleeve and a reservoir chamber over the valve sleeve, a seal member sealing a top opening of the cylinder to define a closed space in the cylinder, wherein hydraulic oil is contained in the closed space of the cylinder with an air layer present over the hydraulic oil, a push rod slidably extending through the seal member and having a bottom end portion thereof inserted in a rod inserting hole formed in a top end surface of the plunger, the plunger being formed with a passage through which the pressure chamber communicates with the reservoir chamber, a check valve configured to close the passage when the pressure in the pressure chamber becomes higher than the pressure in the reservoir chamber, a plunger spring mounted in the pressure chamber and biasing the plunger toward the push rod, and a return spring biasing the push rod in a direction to protrude from the open top end of the cylinder, wherein the valve sleeve, plunger, check valve and plunger spring constitute a disassemblable hydraulic damper unit, the damper unit including means for preventing separation of the plunger from the top opening of the valve sleeve.

In assembling this hydraulic auto-tensioner, the hydraulic damper unit is inserted into the cylinder until the valve sleeve is supported by the bottom of the cylinder; the return spring is then mounted in or around the cylinder; hydraulic oil is supplied into the cylinder; and the seal member and the push rod are mounted in position.

Since the hydraulic damper unit is configured such that the valve sleeve can be filled with hydraulic oil before the hydraulic damper unit is mounted in the cylinder, it is necessary to supply hydraulic oil into the cylinder only once. Also, the possibility is eliminated that air may mixed into the pressure chamber in the valve sleeve when assembling the hydraulic damper unit. Thus, the hydraulic auto-tensioner can be assembled easily.

The valve sleeve may be filled with the hydraulic oil by evacuating the interior of the valve sleeve after assembling the hydraulic damper unit.

The means for preventing separation of the plunger may comprise a lug provided at the top opening of the valve sleeve over and opposite to a top surface of the plunger, said lugs being bendable so as to be away from the top surface of the plunger. Otherwise, this means may comprise a cylindrical member detachably fitted in the top opening of the valve sleeve.

In order to reliably prevent separation of the plunger, there may be provided at least three of said lugs that are circumferentially equidistantly spaced apart from each other.

The cylindrical member may have a flange at one end thereof which is configured to be supported on the top surface of the valve sleeve so that the cylindrical member can be easily fitted in the open end of the sleeve by pushing the flange.

Preferably, the flange has an outer diameter larger than an outer diameter of the valve sleeve so that the cylindrical member can be easily removed by engaging fingertips with the radially outer portion of the flange.

The return spring may be mounted in the reservoir chamber, or mounted around the cylinder.

According to this invention, by provision of the means for preventing separation of the plunger, the hydraulic unit can be formed by assembling together the valve sleeve, plunger, check valve and plunger spring. The hydraulic auto-tensioner according to this invention can thus be assembled extremely easily.

Since the hydraulic damper unit can be disassembled, any damaged one of the internal parts of the damper unit, including the plunger, check valve, and plunger spring can be replaced with a new one.

Since the valve sleeve is filled with hydraulic oil before the hydraulic damper unit is mounted in the cylinder, it is necessary to supply hydraulic oil into the cylinder only once when assembling the hydraulic auto-tensioner. It is also possible to eliminate the necessity to vent air after mounting the hydraulic damper unit in the cylinder. Thus, the hydraulic auto-tensioner can be assembled extremely easily.

Fig. 1 is a vertical sectional view of a hydraulic auto-tensioner embodying the present invention;

Fig. 2 is a vertical sectional view of a hydraulic damper unit comprising a valve sleeve, a plunger, a check valve and a plunger spring;

Fig. 3 is a plan view of Fig. 2;

Fig. 4 is a sectional view of a different means for preventing separation of the plunger;

Fig. 5 is a sectional view of a still different means for preventing separation of the plunger;

Fig. 6 is a sectional view of a further different means for preventing separation of the plunger;

Fig. 7 is a sectional view of a still further different means for preventing separation of the plunger; and

Fig. 8 is a sectional vies of a different hydraulic auto-tensioner embodying the present invention.

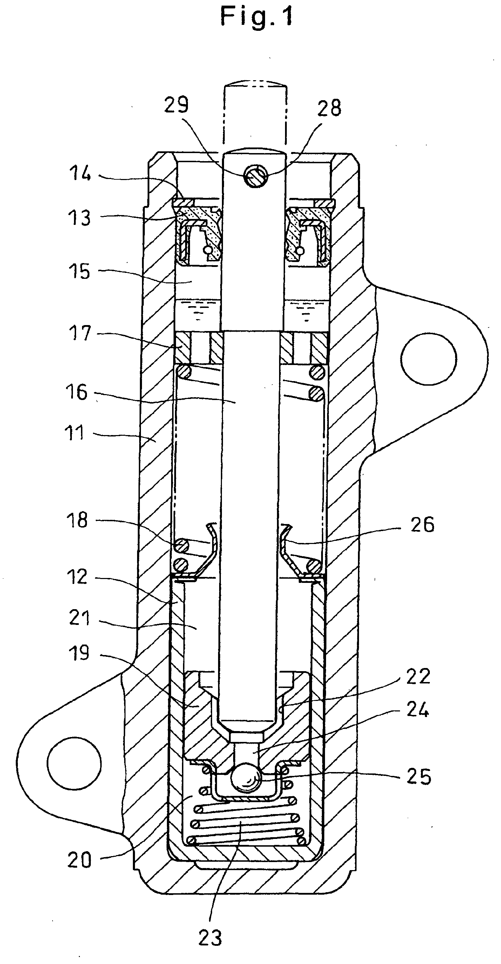

The embodiment of the invention is now described with reference to the drawings. As shown in Fig. 1, the hydraulic auto-tensioner according to the invention includes a cylinder 11 adapted to be mounted to an engine block. The cylinder 11 is made of an aluminum alloy and has a bottom. A valve sleeve 12 is fitted in the cylinder 11. The valve sleeve 12 is made of steel and has a bottom.

A seal member 13 comprising an oil seal is fitted in the cylinder 11 to hermetically close the top opening of the cylinder 11. A snap ring 14 is fitted in the cylinder 11 near its top end to prevent separation of the seal member 13. The seal member 13 prevents leakage of hydraulic oil in the cylinder 11 to the outside. An air layer 15 is present in the cylinder 11 over the hydraulic oil.

A push rod 16 extends through the seal member 13 so as to be slidable relative to the seal member 13. A wear ring 17 is fitted on the push rod 16 at its portion located above the top opening of the valve sleeve 12 so as to be slidable along the radially inner surface of the cylinder 11. A return spring 18 is mounted between the wear ring 17 and the top end of the valve sleeve 12 and biases the push rod 16 in a direction to protrude from the top opening of the cylinder 11.

A plunger 19 is slidably mounted in the valve sleeve 12, thus dividing the interior of the valve sleeve 12 into a pressure chamber 20 and a reservoir chamber 21.

The plunger 19 is formed with a rod inserting hole 22 in its top surface in which the bottom end of the push rod 16 is fitted. A plunger spring 23 is mounted in the pressure chamber 20 to press the plunger 19 against the bottom end of the push rod 16.

The plunger 19 is formed with a passage 24 through which the pressure chamber 20, which is defined under the plunger 19, communicates with the reservoir chamber 21, defined over the plunger 19. A check valve 25 is mounted at the opening of the passage 24 facing the pressure chamber 20. The check valve 25 is configured to close the passage 24 while the pressure in the pressure chamber 20 is higher than the pressure in the reservoir chamber 21.

A separator 26 is fitted between the valve sleeve 12 and the bottom end of the return spring 18 which prevents air forming the air layer 15 from entering the pressure chamber 20.

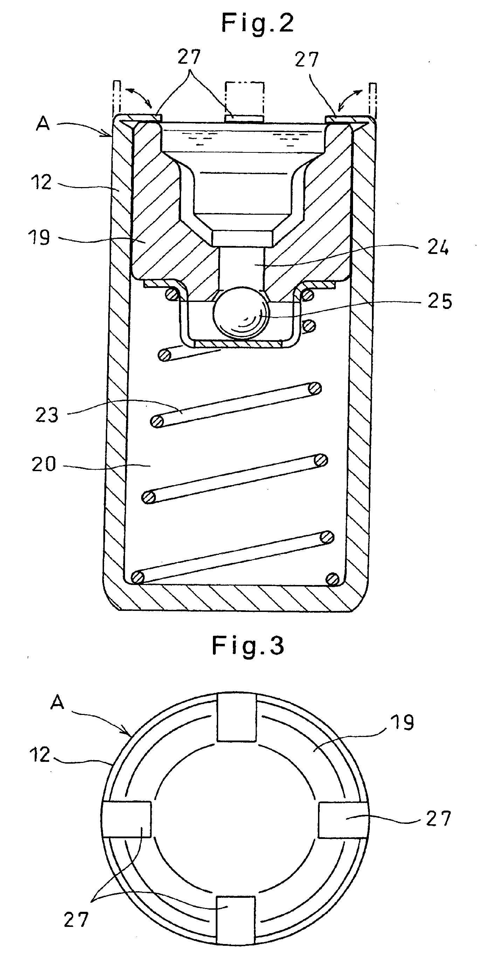

As shown in Fig. 2, the valve sleeve 12 has a plurality of lugs 27 radially inwardly extending from the edge of the top opening of the valve sleeve 12 to prevent separation of the plunger 19 from the valve sleeve 12.

The valve sleeve 12, plunger 19, check valve 25 and plunger spring 23 constitute a hydraulic damper unit A.

The valve sleeve 12 of the embodiment has four circumferentially equidistantly spaced apart lugs 27 of the above type. But the number of the lugs 27 is not limited to four. In order to reliably prevent separation of the plunger 19, however, it is preferable to provide at least three such lugs 27.

The lugs 27 can be bent to upright positions. By bending the lugs 27 to upright positions, the hydraulic damper unit A can be disassembled so that if any component part, such as the plunger 19, of the unit A is damaged, it can be removed from the valve sleeve 12 for replacement with a new one.

Before assembling the hydraulic auto-tensioner, i.e. before the hydraulic damper unit A is mounted in the cylinder 11, the valve sleeve 12 is filled with hydraulic oil.

In order to fill the valve sleeve 12 with hydraulic oil, the hydraulic damper unit A is placed in a tank filled with hydraulic oil, and the entire tank is evacuated to inject hydraulic oil into the hydraulic damper unit A. After injecting hydraulic oil into the damper unit A, the plunger 19 is pushed in with the check valve 25 open to remove air in the pressure chamber 20.

Alternatively, but not claimed, in order to fill the valve sleeve 12 with hydraulic oil, after inserting the hydraulic damper unit A into the cylinder 11 until the valve sleeve 12 is supported on the bottom of the cylinder 11, the entire cylinder 11 or only the radially inner portion of the cylinder 11 may be evacuated to allow sufficient amount of hydraulic oil injected into the assembly. Further alternatively, but not claimed, with hydraulic oil retained in the valve sleeve 12, the plunger spring 23 and the plunger 19 with the check valve 25 mounted thereto may be mounted in the valve sleeve 12.

Fig. 1 shows the hydraulic auto-tensioner of the embodiment, in which a set pin 29 is inserted in a diametric through hole 28 formed in the push rod 16 at its upper portion and radial pin holes (not shown) formed in the cylinder at its upper portion, thereby keeping the push rod 16 retracted in the cylinder 11.

In order to use this auto-tensioner for adjusting the tension of a timing belt for driving camshafts, the cylinder 11 is mounted on an engine block, and the set pin 29 is pulled out of the holes. The push rod 16 is thus pushed out of the cylinder 11 under the biasing force of the return spring 18. The push rod 16 thus pushes a pivotally supported pulley arm (not shown), thereby pressing a tension pulley (not shown either) which is rotatably supported by the pulley arm against the timing belt. Pushing force applied to the push rod 16 from the timing belt through the pulley arm is absorbed by the damper function provided by the hydraulic oil in the pressure chamber 20, thus keeping constant the tension of the belt.

In assembling the hydraulic auto-tensioner, the hydraulic damper unit A shown in Fig. 2, which is filled with hydraulic oil, is inserted into the cylinder 11 from its top opening, with the opening of the valve sleeve 12 facing upward until the valve sleeve 12 is supported on the bottom of the cylinder 11. Then, the separator 26 and the return spring 18 are mounted in the cylinder 11. Before or after the return spring 18 is mounted in the cylinder 11, a necessary amount of hydraulic oil is supplied into the cylinder 11. Since the hydraulic damper unit A is already filled with hydraulic oil in this state, it is necessary to supply hydraulic oil into the cylinder 11 only once, and not necessary to additionally supply hydraulic oil into the cylinder.

After supplying hydraulic oil into the cylinder, with the wear ring 17 and the seal member 13 mounted to the push rod 16, the bottom end portion of the push rod 16 is inserted into the rod inserting hole 22 of the plunger 19, and the seal member 13 is simultaneously fitted in the top opening of the cylinder 11. Then the snap ring 14 is fitted in the cylinder at its top end portion. The auto-tensioner is thus assembled.

In assembling this hydraulic auto-tensioner, since the valve sleeve 12 of the hydraulic damper unit A is filled with hydraulic oil beforehand, it is necessary to supply hydraulic oil into the cylinder 11 only once. Since no air is mixed into the valve sleeve 12 when assembling the hydraulic damper unit A, it is possible to eliminate the step of venting air after mounting the hydraulic damper unit A in the cylinder 11. The hydraulic auto-tensioner according to the present invention can thus be assembled extremely easily.

In Fig. 2, the plurality of lugs 27 are formed at the open end of the valve sleeve 12 to prevent separation of the plunger 19. But a different means may be used to prevent separation of the plunger 19.

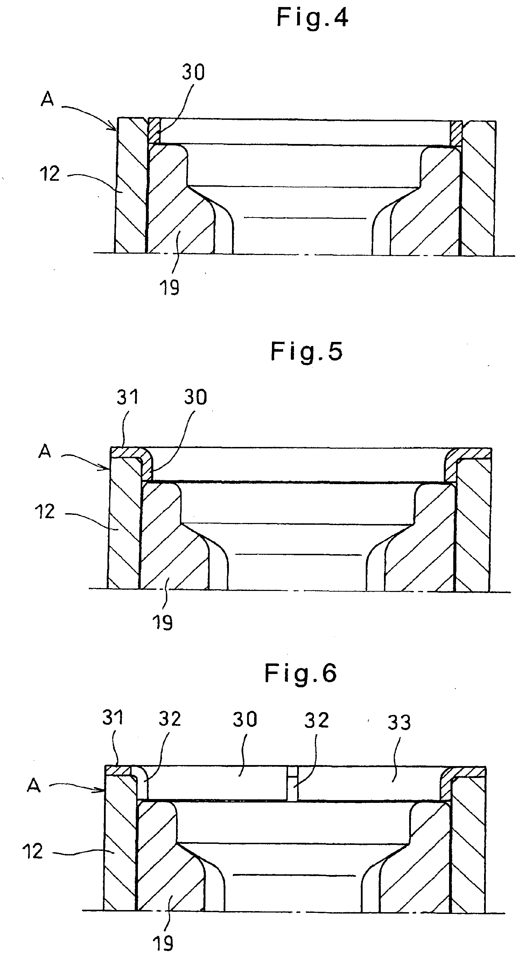

Fig. 4 shows a different means for preventing separation of the plunger 19. In Fig. 4, a cylindrical member 30 is press-fitted into the open end portion of the valve sleeve 12 to prevent separation of the plunger 19.

The cylindrical member 30 may be made of a metal or a non-metallic material such as resin or rubber. The cylindrical member 30 is press-fitted with such a light force that the cylindrical member 30 can be easily removed but the plunger spring 23 cannot push the cylindrical member 30 out of the valve sleeve 12.

Preferably, the cylindrical member 30 has a flange 31 at one end thereof that can be supported on the top surface of the valve sleeve 12. With this arrangement, the cylindrical member 30 can be easily fitted in the open end portion of the valve sleeve 12 simply by pushing the flange 30 until it abuts the top end of the valve sleeve 12.

As shown in Fig. 6, the cylindrical member 30 may be further formed with a plurality of slits 32 axially extending from one to the other ends thereof and circumferentially spaced apart from each other, with elastic pieces 33 disposed between respective adjacent slits 32. With this arrangement, when the cylindrical member 30 is press-fitted into the open end portion of the valve sleeve 12, the elastic pieces 33 are radially inwardly elastically deformed by contact with the radially inner surface of the valve sleeve 12. Thus, the cylindrical member 30 can be easily mounted to the valve sleeve.

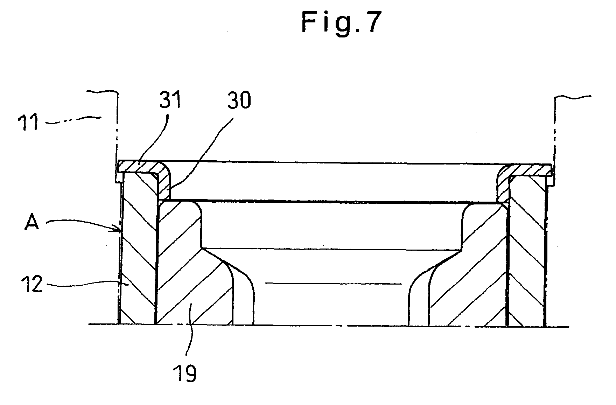

As shown in Fig. 7, the flange 31 preferably has an outer diameter larger than the outer diameter of valve sleeve 12 so that the cylindrical member 30 can be easily removed from the valve sleeve 12 by engaging a tool or fingertips with the radially outer portion of the flange 31. In this arrangement, the radially inner surface of the cylinder 11 has a large-diameter upper portion so that the hydraulic damper unit A can be mounted in the cylinder 11.

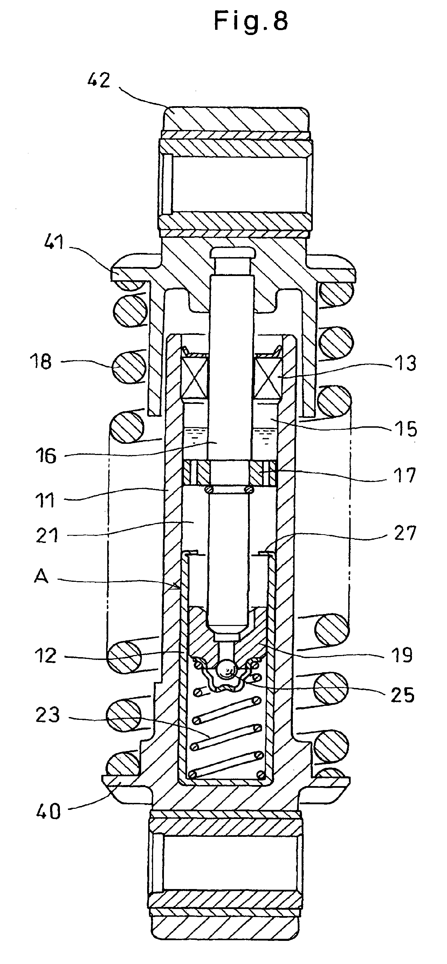

The hydraulic auto-tensioner shown in Fig. 1 is a hydraulic auto-tension for adjusting the tension of a timing belt for driving camshafts in which the return spring 18 is mounted in the reservoir chamber 21. But the hydraulic auto-tensioner according to the present invention is not limited to this type. For example, Fig. 8 shows another hydraulic auto-tensioner according to the present invention, of which the return spring 18 is mounted around the cylinder 11 with one end thereof supported on a spring seat 40 formed on the radially outer surface of the cylinder 11 at its bottom end portion, and the other end supported by a spring seat 41 mounted to the protruding end of the push rod 16 and having a having a coupling piece 42 to be coupled to a pulley arm, for adjusting the tension of a belt for driving engine accessories.

## Claims

1. Method for assembling a hydraulic auto-tensioner comprising a cylinder (11) having a closed bottom end and an open top end, a valve sleeve (12) made of steel and having a bottom and a top opening, said valve sleeve (12) being inserted in the cylinder (11), a plunger (19) slidably mounted in the valve sleeve (12) to define a pressure chamber (20) under the valve sleeve (12) and a reservoir chamber (21) over the valve sleeve (12), a seal member (13) sealing a top opening of the cylinder to define a closed space in the cylinder (11), wherein hydraulic oil is contained in the closed space of the cylinder (11) with an air layer present over the hydraulic oil, a push rod (16) slidably extending through the seal member (13) and having a bottom end portion thereof inserted in a rod inserting hole formed (22) in a top end surface of the plunger (19), the plunger (19) being formed with a passage (14) through which the pressure chamber communicates with the reservoir chamber (21), a check valve (25) configured to close the passage when the pressure in the pressure chamber (20) becomes higher than the pressure in the reservoir chamber (21), a plunger spring (23) mounted in the pressure chamber (20) and biasing the plunger (19) toward the push rod (16), and a return spring (18) biasing the push rod (16) in a direction to protrude from the open top end of the cylinder (11),
wherein the valve sleeve (12), plunger (19), check valve (25) and plunger spring (23) constitute a disassemblable hydraulic damper unit (A), the damper unit (A) including means for preventing separation of the plunger (19) from the top opening of the valve sleeve (12),
wherein the hydraulic damper unit (A) is configured such that the valve sleeve (12) can be filled with hydraulic oil before the hydraulic damper unit (A) is mounted in the cylinder (11),
**characterized by**
filling the valve sleeve (12) with the hydraulic oil after assembling the hydraulic damper unit (A) and before mounting the hydraulic damper unit in the cylinder.

2. The method for assembling the hydraulic auto-tensioner of claim 1, the hydraulic oil is filled in the interior of the valve sleeve (12) by placing the hydraulic damper unit (A) in a tank with hydraulic oil, wherein the tank is evacuated to inject hydraulic oil into the hydraulic damper unit (A).

3. The method for assembling the hydraulic auto-tensioner of claim 1 or 2, wherein said means for preventing separation of the plunger (19) comprise a lug (27) provided at the top opening of the valve sleeve (12) over and opposite to a top surface of the plunger (19) said lug (27) being bendable so as to be away from the top surface of the plunger (19).

4. The method for assembling the hydraulic auto-tensioner of claim 3, wherein there are at least three of said lugs (27) that are circumferentially spaced from each other.

5. The method for assembling the hydraulic auto-tensioner of any of claims 1-4, wherein said means for preventing separation of the plunger (19) comprises a cylindrical member (30) detachably fitted in the top opening of the valve sleeve (12).

6. The method for assembling the hydraulic auto-tensioner of claim 5, wherein the cylindrical member (30) is made of a metal or a non-metallic material.

7. The method for assembling the hydraulic auto-tensioner of claim 5 or 6, wherein the cylindrical member (30) has a flange (31) at one end thereof which is configured to be supported on the top surface of the valve sleeve (12).

8. The method for assembling the hydraulic auto-tensioner of claim 7, wherein the flange (31) has an outer diameter larger than an outer diameter of the valve sleeve (12).

9. The method for assembling the hydraulic auto-tensioner of any of claims 5-7, wherein the cylindrical member is formed with axial slits (32) that allow radial elastic deformation of the cylindrical member (30).

10. The method for assembling the hydraulic auto-tensioner of any of claims 1-9, wherein the return spring (18) is mounted in the reservoir chamber (21), and wherein the auto-tensioner is configured to be used to adjust the tension of a timing belt for driving camshafts.

11. The method for assembling the hydraulic auto-tensioner of any of claims 1-9, wherein the return spring (18) is mounted around the cylinder (11), the auto-tensioner further comprising a first spring seat (41) provided on an outer periphery of the cylinder (11) at its rear end portion and supporting a first end of the return spring (18), and a second spring seat (41) provided on the push rod (16) at its front end portion and supporting a second end of the return spring (18), wherein the second spring seat (41) having a coupling piece (42) configured to be coupled to a pulley arm, and wherein the auto-tensioner is configured to be used to adjust the tension of a belt for driving engine accessories.

## Patentansprüche

1. Verfahren zur Montage eines hydraulischen Selbstspanners, aufweisend einen Zylinder (11) mit einem geschlossenen Bodenende und einem offenen Kopfende, eine Ventilhülse (12), die aus Stahl hergestellt ist und eine Boden- und eine Kopföffnung aufweist, wobei die Ventilhülse (12) in den Zylinder (11) eingesetzt wird, einen Kolben (19), der in der Ventilhülse (12) zum Definieren einer Druckkammer (20) unter der Ventilhülse (12) und einer Reservoirkammer (21) über der Ventilhülse (12), verschiebbar montiert wird, ein Dichtelement (13), das eine Kopföffnung des Zylinders zum Definieren eines geschlossenen Raumes in dem Zylinder (1) abdichtet, wobei Hydrauliköl in dem geschlossenen Raum des Zylinders (11) mit einer Luftschicht, die über dem Hydrauliköl vorhanden ist, beinhaltet ist, einen Druckstab (16), der sich durch das Dichtelement (13) hindurch verschiebbar erstreckt und wobei ein Bodenendabschnitt davon in einem Stabeinführloch (22), das in einer Kopfendfläche des Kolbens (19) ausgebildet ist, eingesetzt worden ist, wobei der Kolben (19) mit einer Passage (14) ausgebildet ist, durch welche die Druckkammer mit der Reservoirkammer (21) kommuniziert, ein Sperrventil (25), das zum Schließen der Passage konfiguriert ist, wenn der Druck in der Druckkammer (20) höher als der Druck in der Reservoirkammer (21) wird, eine Kolbenfeder (23), die in der Druckkammer (20) montiert wird und den Kolben (19) hin zu dem Druckstab (16) zwingt, und eine Rückstellfeder (18), die den Druckstab (16) in eine Richtung zum Vorstehen aus dem offenen Kopfende des Zylinders (11) zwingt, wobei die Ventilhülse (12), der Kolben (19), das Sperrventil (25) und die Kolbenfeder (23) eine demontierbare hydraulische Dämpfereinheit (A) bilden, wobei die Dämpfereinheit (A) Mittel zur Trennungs-Verhinderung des Kolbens (19) von der Kopföffnung der Ventilhülse (12) aufweist, wobei die hydraulische Dämpfereinheit (A) derart konfiguriert ist, dass die Ventilhülse (12) mit Hydrauliköl befüllt werden kann, bevor die hydraulische Dämpfereinheit (A) in den Zylinder (11) montiert wird,
**gekennzeichnet durch**
Befüllen der Ventilhülse (12) mit dem Hydrauliköl nach der Montage der hydraulischen Dämpfereinheit (A) und vor der Montage der hydraulischen Dämpfereinheit in den Zylinder.

2. Verfahren zur Montage des hydraulischen Selbstspanners nach Anspruch 1, wobei das Hydrauliköl in das Innere der Ventilhülse (12) durch Platzieren der hydraulischen Dämpfereinheit (8) in einen Behälter mit Hydrauliköl befüllt wird, wobei der Behälter zum Hinein-Injizieren des Hydrauliköls in die hydraulische Dämpfereinheit (A) evakuiert wird.

3. Verfahren zur Montage des hydraulischen Selbstspanners nach Anspruch 1 oder 2, wobei die Mittel zur Trennungs-Verhinderung des Kolbens (19) einen Ansatz (27) aufweisen, der an der Kopföffnung der Ventilhülse (12) über und gegenüber einer Kopffläche des Kolbens (19) vorgesehen ist, wobei der Ansatz (27) so biegbar ist, dass er weg von der Kopffläche des Kolbens (19) sein kann.

4. Verfahren zur Montage des hydraulischen Selbstspanners nach Anspruch 3, wobei es mindestens drei der Ansätze (27) gibt, die umfänglich zueinander beabstandet sind.

5. Verfahren zur Montage des hydraulischen Selbstspanners nach einem der Ansprüche 1 bis 4, wobei die Mittel zur Trennungs-Verhinderung des Kolbens (19) ein zylindrisches Element (30) aufweisen, das in der Kopföffnung der Ventilhülse (12) lösbar angebracht ist.

6. Verfahren zur Montage des hydraulischen Selbstspanners nach Anspruch 5, wobei das zylindrische Element (30) aus einem Metall oder einem Nichtmetall hergestellt ist.

7. Verfahren zur Montage des hydraulischen Selbstspanners nach Anspruch 5 oder 6, wobei das zylindrische Element (30) einen Flansch (31) an einem Ende davon aufweist, der zum Abstützen an der Kopffläche der Ventilhülse (12) konfiguriert ist.

8. Verfahren zur Montage des hydraulischen Selbstspanners nach Anspruch 7, wobei der Flansch (31) einen Außendurchmesser aufweist, der größer als ein Außendurchmesser der Ventilhülse (12) ist.

9. Verfahren zur Montage des hydraulischen Selbstspanners nach einem der Ansprüche 5 bis 7, wobei das zylindrische Element mit axialen Schlitzen (32) ausgebildet ist, die eine radial elastische Deformation des zylindrischen Elements (30) erlauben.

10. Verfahren zur Montage des hydraulischen Selbstspanners nach einem der Ansprüche 1 bis 9, wobei die Rückstellfeder (18) in der Reservoirkammer (21) montiert wird und wobei der Selbstspanner zur Benutzung zum Einstellen der Spannung eines Antriebsriemens zum Antreiben von Nockenwellen konfiguriert ist.

11. Verfahren zur Montage des hydraulischen Selbstspanners nach einem der Ansprüche 1 bis 9, wobei die Rückstellfeder (18) um den Zylinder (11) herum montiert wird, wobei der Selbstspanner ferner einen ersten Federsitz (41), der an einer Außenperipherie des Zylinders (11) an seinem hinteren Endabschnitt vorgesehen ist und ein erstes Ende der Rückstellfeder (18) abstützt, und einen zweiten Federsitz (41) aufweist, der an dem Drückstab (16) an seinem vorderen Endabschnitt vorgesehen ist und ein zweites Ende der Rückstellfeder (18) abstützt, wobei der zweite Federsitz (41) ein Kupplungsstück (42) aufweist, das mit einem Antriebsarm kuppelbar ist, und wobei der Selbstspanner zur Verwendung zum Einstellen der Spannung eines Riemens zum Antreiben von Motorzusatzteilen konfiguriert ist.

## Revendications

1. Procédé d'assemblage d'un tendeur automatique hydraulique comprenant un cylindre (11) ayant une extrémité inférieure fermée et une extrémité supérieure ouverte, une douille de valve (12) réalisée en acier et ayant un fond et une ouverture supérieure, ladite douille de valve (12) étant insérée dans le cylindre (11), un piston (19) monté de manière coulissante dans la douille de valve (12) afin de définir une chambre de pression (20) au-dessous de la douille de valve (12) et une chambre de réservoir (21) au-dessus de la douille de valve (12), un élément d'étanchéité (13) fermant hermétiquement l'ouverture supérieure du cylindre afin de définir un espace fermé dans le cylindre (11), dans lequel de l'huile hydrauliques est contenue dans l'espace fermé du cylindre (11) avec une couche d'air présente au-dessus de l'huile hydraulique, un poussoir (16) s'étendant de manière coulissante à travers l'élément d'étanchéité (13) et dont une partie d'extrémité inférieure est insérée dans un trou d'insertion de tige formé (22) dans une surface d'extrémité supérieure du piston (19), le piston (19) étant muni d'un passage (14) à travers lequel la chambre de pression communique avec la chambre de réservoir (21), un clapet anti-retour (25) configuré pour fermer le passage lorsque la pression dans la chambre de pression (20) devient supérieure à la pression dans la chambre de réservoir (21), un ressort de piston (23) monté dans la chambre de pression (20) et poussant le piston (19) vers le poussoir (16) et un ressort de rappel (18) poussant la tige de piston (16) dans une direction lui permettant de sortir de l'extrémité supérieure ouverte du cylindre (11),
dans lequel la douille de valve (12), le piston (19), le clapet anti-retour (25) et le ressort de piston (23) constituent une unité d'amortisseur hydraulique démontable (A), l'unité d'amortisseur (A) incluant un moyen pour empêcher la séparation du piston (19) de l'ouverture supérieure de la douille de valve (12),
dans lequel l'unité d'amortisseur hydraulique (A) est configurée de sorte que la douille de valve (12) peut être remplie d'huile hydraulique avant de monter l'unité d'amortisseur hydraulique (A) dans le cylindre (11),
**caractérisé par**
le remplissage de la douille de valve (12) avec l'huile hydraulique après assemblage de l'unité d'amortisseur hydraulique (A) et avant montage de l'unité d'amortisseur hydraulique dans le cylindre.

2. Procédé d'assemblage du tendeur automatique hydraulique selon la revendication 1, dans lequel on remplit l'intérieur de la douille de valve (12) avec l'huile hydraulique en plaçant l'unité d'amortisseur hydraulique (A) dans un réservoir avec de l'huile hydraulique, dans lequel le réservoir est vidé pour injecter l'huile hydraulique dans l'unité d'amortisseur hydraulique (A).

3. Procédé d'assemblage du tendeur automatique hydraulique selon la revendication 1 ou 2, dans lequel ledit moyen pour empêcher la séparation du piston (19) comprend une languette (27) prévue au niveau de l'ouverture supérieure de la douille de valve (12) au-dessus de la surface supérieure du piston (19) et opposée à celle-ci, ladite languette (27) pouvant être pliée de façon à l'éloigner de la surface supérieure du piston (19).

4. Procédé d'assemblage du tendeur automatique hydraulique selon la revendication 3, dans lequel il existe au moins trois desdites languettes (27) qui sont circonférentiellement espacées les unes des autres.

5. Procédé d'assemblage du tendeur automatique hydraulique selon l'une quelconque des revendications 1 à 4, dans lequel ledit moyen pour empêcher la séparation du piston (19) comprend un élément cylindrique (30) ajusté de manière amovible dans l'ouverture supérieure de la douille de valve (12).

6. Procédé d'assemblage du tendeur automatique hydraulique selon la revendication 5, dans lequel l'élément cylindrique (30) est fait d'un métal ou d'un matériau non métallique.

7. Procédé d'assemblage du tendeur automatique hydraulique selon la revendication 5 ou 6, dans lequel l'élément cylindrique (30) comporte une bride (31) à une extrémité de celui-ci, qui est configurée de manière à être supportée sur la surface supérieure de la douille de valve (12).

8. Procédé d'assemblage du tendeur automatique hydraulique selon la revendication 7, dans lequel la bride (31) possède un diamètre externe plus grand que le diamètre externe de la douille de valve (12).

9. Procédé d'assemblage du tendeur automatique hydraulique selon l'une quelconque des revendications 5 à 7, dans lequel l'élément de cylindre est muni de fentes axiales (32) permettant une déformation élastique radiale de l'élément cylindrique (30).

10. Procédé d'assemblage du tendeur automatique hydraulique selon l'une quelconque des revendications 1 à 9, dans lequel le ressort de rappel (18) est monté dans la chambre de réservoir (21), et dans lequel le tendeur automatique est configuré pour être utilisé pour régler la tension d'une courroie de distribution pour entraîner des arbres à cames.

11. Procédé d'assemblage du tendeur automatique hydraulique selon l'une quelconque des revendications 1 à 9, dans lequel le ressort de rappel (18) est monté autour du cylindre (11), le tendeur automatique comprenant en outre un premier siège de ressort (41) prévu sur la périphérie externe du cylindre (11) au niveau de sa partie d'extrémité arrière et supportant une première extrémité du ressort de rappel (18), et un second siège de ressort (41) prévu sur le poussoir (16) au niveau de sa partie d'extrémité avant et supportant une seconde extrémité du ressort de rappel (18), dans lequel le second siège de ressort (41) comporte une pièce d'accouplement (42) configurée pour être accouplée avec un bras de poulie, et dans lequel le tendeur automatique est configuré pour être utilisé pour régler la tension d'une courroie pour entraîner des accessoires de moteur.
